(19) Europäisches Patentamt / European Patent Office / Office européen des brevets

(11) **EP 2 466 533 A1**

(12) **EUROPEAN PATENT APPLICATION**

(43) Date of publication:
**20.06.2012 Bulletin 2012/25**

(51) Int Cl.:
***G06N 3/02*** (2006.01)    *G01G 23/00* (2006.01)
***G06N 3/08*** (2006.01)

(21) Application number: **11171261.8**

(22) Date of filing: **24.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.12.2010 KR 20100127275**

(71) Applicants:
• **Kim, Ki Tae**
  **Deadeok-gu**
  **Deajeon**
  **306-813 (KR)**
• **Kim, Hong Kyun**
  **Deajeon**
  **305-715 (KR)**

(72) Inventors:
• **Kim, Ki Tae**
  **Deadeok-gu**
  **Deajeon**
  **306-813 (KR)**
• **Kim, Hong Kyun**
  **Deajeon**
  **305-715 (KR)**

(74) Representative: **Kling, Simone et al**
  **Lavoix Munich**
  **Bayerstrasse 85a**
  **80335 München (DE)**

(54) **Method and system for detecting overload and unlawful measurement of vehicle**

(57)    This invention is for method and system to detect correctly overload & unlawful loading of cargoes under any circumstance.

Detection method of wrong measurement according to this invention are configured of Practicing Phase of Artificial Intelligence Algorithm to discriminate Wrong Measured Information by false manipulation of axle from Normal Measured Information without false manipulation of axle of vehicles by Pattern Information; Recognizing entering vehicle & Collecting Phase of Basic Data of the vehicle including dead weight, maximum pay load, and axles information; Verifying Phase of current vehicle information including total weight, load on each axle, and entering speed; And Classifying Phase of Measured Status of above vehicle using above collected and verified information as input value to Artificial Intelligence Algorithm

It might be desirable that Neural Back-Propagation Algorithm is implemented to detection method of wrong measurement according to the Invent as an Artificial Intelligence Algorithm.

FIG.8

EP 2 466 533 A1

**Description**

[The Art to which the Invention pertains]

This Invention is for method and system to detect overload & unlawful measurement applied to axle load weigher used in highway toll gates and others. Especially an artificial intelligence algorithm such as Neural Back-Propagation Algorithm is implemented to the Invention to detect overload & unlawful loading of cargoes under any circumstance.

[Background Technology]

Overloaded vehicles may cause not only crack and deformation of roads but also shorten pavement lifespan. This undesirable phenomena will increase risks resulting in traffic accidents and be accompanied with huge expenses and long times for maintenance of road. Especially, overloaded cargo trucks are key causes of road damages.
For reference, when an axle load of a cargo truck is 10t, 11t and 15t, its impact on road damage is equivalent to passing of 70,000, 110,000 and 390,000 passenger cars, respectively.
Overload-detecting devices can be categorized into two types; 1) a device that measures load of a stopped vehicle, and 2) a device that measures load of a moving vehicle. Among these two types, a type of weight measuring device for a stopped vehicle should have a corresponding vehicle stopped and guided to the device, therefore take long hours of measurement. Furthermore, making a moving vehicle on a highway stopped and guided can be not only highly risky (e.g. traffic accident) but also very expensive.
Therefore, weight measuring method using a type of device to measure weight of a moving car is recommended, and lots of various devices of this type have been developed and applied. For example, an axle load weigher using load cell on road surface can be categorized in this type of device and has been widely utilized to detect unlawful overloads. If any overloaded vehicle passes by, the device will identify a license plate of the vehicle with a camera to enforce police activity.
Usually, most current weight measuring systems are equipped with pads of 2 load cells (weight measuring sensor) for cost and other reasons. However, due to lack of most truck drivers' commitments, these systems are increasingly used for cheating by truck drivers. For example, they have cheated these systems with certain unlawfulial technique so called "passing with wheels lifted up" or deceitful loading techniques with special structure.

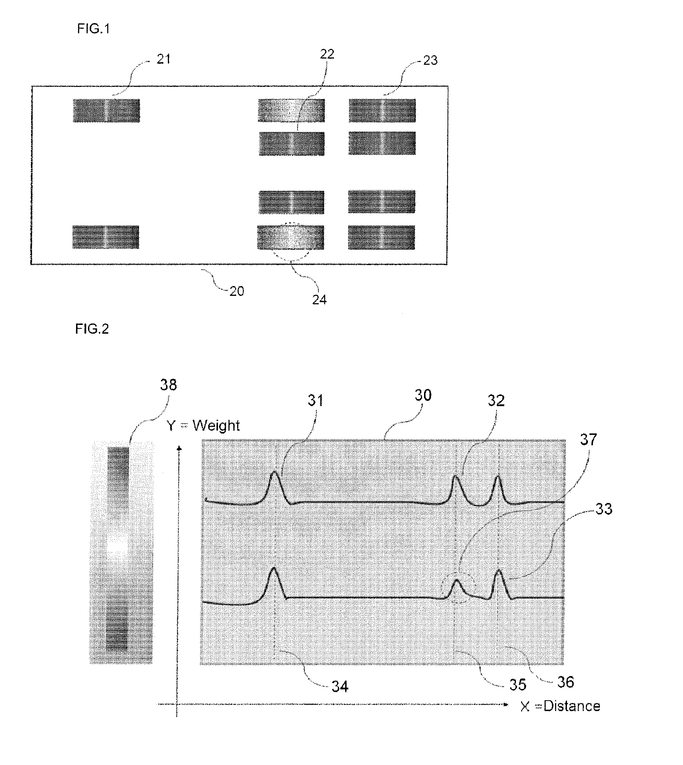

FIG.1 and 2 illustrate weight balance shown in the sensor of each vehicle axle in the "passing with wheels lifted up" technique.
As depicted in the FIG.1 for total load distribution of a vehicle #20, the wheel #24 located exterior to the wheel #22 takes different load, while exerted loads on the wheels 21 and 23 are same. This could be enabled because a driver slightly lifts up an exterior wheel with specially designed wheel control device and thus unlawfully decreases total load for an instant sensing time of weight. This unlawful technique is shown in the FIG.2 by graph. Depicted in the Graph 38, the redder it becomes, the heavier a vehicle is. Contrarily, the bluer it gets, the lighter the vehicle is. FIG.2 indicates that weight of the wheel (31) of the axle #1 (34) and that of other wheel (33) of the axle #3 (36) are Normally distributed while weight of the one side wheel (37) of the axle #2 (35) is different color from other Normal weight (32).
To prevent these types of cheating and unlawful techniques, detection devices equipped with 4 pads have been suggested; however, higher costs caused by more numbers of installed pads, along with inconsistent spacing among wheel axles, have triggered diverse difficulties for efficient detection of overload & unlawful loading of all types of vehicles.
Therefore, there have been more requirements for a new device or system that can accurately and effectively detect every overload & unlawful loading technique with as less pads as possible.

[Details of the Invention]

[Problems to be solved]

This invention is designated to resolve those problems referred above. The purpose of this invention is to supply with detection method and system of wrong measurement using an Artificial Intelligence Algorithm (e.g. Neural Back-Propagation Algorithm) and thereby to enable an accurate detection of overload & unlawful loading of cargoes under any circumstance.

[Solving Methods of Problems]

In the light of above a detection method according to claim 1, and detection systems according to claims 7 and 8 are provided.

A Detecting Method of Wrong Measurement to achieve above purpose is configured of Practicing Phase of Artificial Intelligence Algorithm to discriminate Wrong Measured Information by false manipulation of axle from Normal Measured Information without false manipulation of axle of vehicles by Pattern Information;

Recognizing entering vehicle & Collecting Phase of Basic Data of the vehicle including dead weight, maximum pay-load, and axles information;

Verifying Phase of current vehicle information including total weight, load on each axle, and entering speed;

And Classifying Phase of Measured Status of above vehicle using above collected and verified information as input value to Artificial Intelligence Algorithm.

When above Vehicle Basic Data is collected & current vehicle information is verified, it is desirable to use thereof information to calculate each weight information of all false manipulation cases of axles to feed to Artificial Intelligence Algorithm as Input Value. According to an embodiment, it might be desirable that Neural Back-Propagation Algorithm is implemented to the detection method of wrong measurement according to the invention as an Artificial Intelligence Algorithm.

A Detecting System of Wrong Measurement according to this invention to achieve above purpose is configured of Vehicle Information Measuring Unit to measure entering Vehicle Information installed in Axle Load Weigher for detecting wrong measurement of a vehicle;

Artificial Intelligence Processor to detect wrong measurement if any, by executing practiced Artificial Intelligence Algorithm according to Vehicle Information created by Vehicle Information Measuring Unit;

An Input Unit to input data into above Artificial Intelligence Processor; A Display Unit to display if any wrong measurement executed by above Artificial Intelligence Processor;

A Practice Unit to execute practices of Artificial Intelligence Algorithm accommodated in above Artificial Intelligence Processor;

And Vehicle Information DB to supply above Artificial Intelligence Processor with Basic Vehicle Data and False Manipulation Information of Axle and to store measured information executed by Artificial Intelligence Processor.

Above Vehicle Information Measuring Unit is equipped with Video Sensor to identify vehicle license plate to collect Basic Data of the object vehicle, Weight Sensor to measure vehicle weight, Height Sensor to detect over-height of cargoes loaded on the vehicle, Axle Number Separator to obtain axle information failed to get from license plate of the vehicle, and Speed Sensor to measure initial entering speed of the vehicle.

[Benefits of Invention]

Method and system according to this invention to detect any unlawful and cheating manipulation of weight measuring are very effective under any circumstance. Moreover, the detection method and system according to this invention do not require for additional expensive sensor pads and are therefore economically effective and efficient.

Besides utilizing current Weight Sensor pads without adding new sensors, the detection method and system according to this invention are compatible with the applications of the existent OS (Operating System), therefore provide several diversified benefits (e.g. reduction in installation/maintenance costs, enhancement of efficiency, etc).

Further advantages, features, aspects and details are evident from dependent claims, the description and the drawings, which relate to embodiments of the invention and are described in the followings:

FIG.1 & 2: Concept diagram of weight balance shown in each vehicle axle sensor for the "passing with wheels lifted up" manipulation

FIG.3: Hierarchy structure diagram of the Neural Back-Propagation Algorithm implemented to this Invent

FIG.4: Explanation flow chart of the Neural Back-Propagation Algorithm implemented to a Detecting Method of Wrong Measurement according to this Invent

FIG.5: Concept Diagram of Practice of the Neural Back-Propagation Algorithm for normally loaded vehicles according to this Invent

FIG.6: Concept Diagram of Practice of the Neural Back-Propagation Algorithm for abnormally loaded vehicles after false manipulation of axle.

FIG.7: Actually applied Concept Diagram of the Neural Back-Propagation Algorithm practiced in above Figures of 5 & 6

FIG.8: Block diagram of a Detecting System of Wrong Measurement according to this Invent

FIG.9 & 10: Concept Diagram and flow chart of a Detecting Method of Wrong Measurement according to this Invent

FIG.11: Sequence diagram of a Detecting Process of Wrong Measurement according to this Invent

FIG.12: Example drawing of actual data calculated by Detecting Method of Wrong Measurement using Neural Back-Propagation Algorithm according to an implementation example of this Invent

[Specific implemention of the invention]

Hereunder, desirable implementation case of the Invention is explained specifically with attached Figures.

The method and system for detecting wrong measurement according to this invention execute practices of Artificial Intelligence Algorithm by implementing measured Information Patterns of Wrong Measured Information by false manipulation of axle and Normal Measured Information without false manipulation of axle of vehicles and

Then, actually measured information are inputted into the algorithm, and the algorithm returns relevant outputs to detect any unlawful and cheating weight manipulation.

In implementation case of the Invention, Neural Back-Propagation Algorithm is used for Artificial Intelligence Algorithm, and thereof practice concept is explained hereunder.

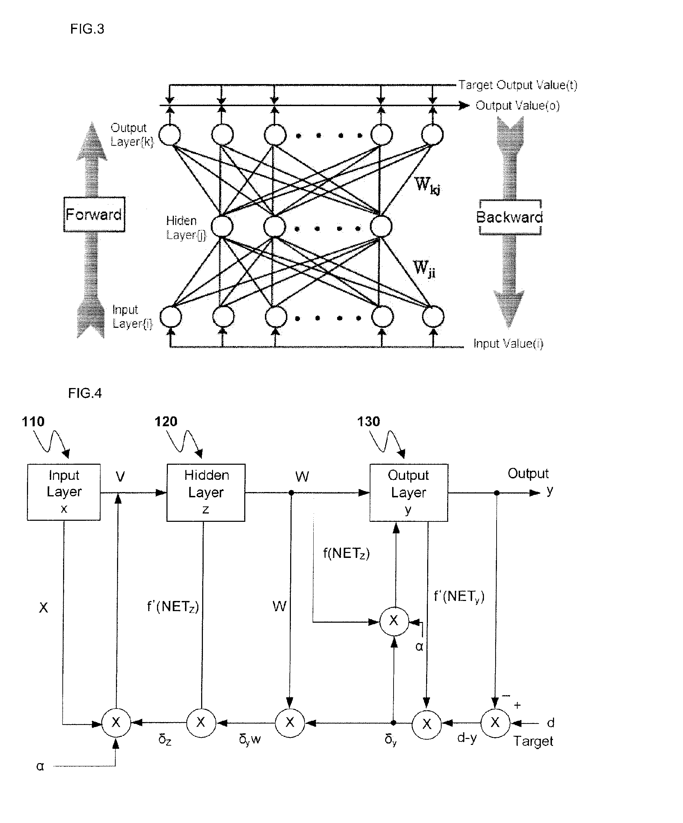

FIG.3 shows an hierarchy structure diagram of the Neural Back-Propagation Algorithm. Based on this Figure, practice procedure of the Neural Back-Propagation Algorithm is as follows.

[Step 1] First of all, initialize those network interface-strength variables such as 'w$_{ji}$', 'wkj' and 'offset θj/θk' by random numbers that generally lie between -0.5 ~ 0.5.

[Step 2] Then, select a relevant practice pattern for the algorithm.

[Step 3] Compute the following values; 1) An output value 'o$_{pi}$' that is generated from a certain value associated with the practice pattern and outputted at the Input Layer, 2) An interface-strength value 'w$_{ji}$' between the Input Layer and the middle layer, and 3) An input value 'net$_{pj}$' of the middle layer j that is generated from the offset. And, use the value of 'net$_{pj}$' and the sigmoid function 'f' to compute an output value of 'o$_{pj}$' of the middle layer j.

$$net_{pj} = \sum_i w_{ji} o_{pi} + \theta_j$$

$$o_{pj} = f_j(net_{pj})$$

[Step 4] Use the output value of 'o$_{pj}$' at the middle layer, the interface-strength value of 'w$_{pk}$' between the middle layer and the Output Layer and the offset at the Output Layer k in order to compute an input value of 'net$_{pk}$' at the Output Layer k. Then, use the 'net$_{pk}$' and the sigmoid function 'f' to compute an output value of 'o$_{pk}$' at the Output Layer k.

$$net_{pk} = \sum_j w_{kj} o_{pj} + \theta_k$$

$$o_{pk} = f_k(net_{pk})$$

[Step 5] Compute an interface-strength value at the Output Layer k and an error 'δ$_{pk}$' for the offset at the Output Layer k using the difference between a target output 't$_{pk}$' of the practice pattern and its actual output 'o$_{pk}$'.

$$\delta_{pk} = (t_{pk} - o_{pk})f'_k(net_{pk}) = (t_{pk} - o_{pk})o_{pk}(1 - o_{pk})$$

[Step 6] Compute an error 'δ$_{pj}$' for the interface-strength value at the middle layer j and the offset at the middle layer using the error 'δ$_{pk}$', the interface-strength value 'w$_{kj}$' between the middle layer and Output Layer and the output value 'net$_{pj}$' at the middle layer.

$$\delta_{pj} = f'_k(net_{pj}) \sum_k \delta_{pk} w_{kj} = \sum_k \delta_{pk} w_{kj} o_{pj} (1 - o_{pj})$$

[Step 7] Multiply the error '$\delta_{pk}$' at the Output Layer k computed in the step 5 by the constant '$\alpha$' and the output value of '$o_{pj}$' at the middle layer j. Add this multiplied value to the interface-strength variables '$w_{kj}$' for revision. Furthermore, revise the offset '$\theta_k$' at the Output Layer k by adding the error '$\theta_{pk}$' multiplied by the constant '$\beta$'.

$$w_{kj} = w_{kj} + \alpha \cdot \delta_{pk} o_{pj}$$

$$\theta_k = \theta_k + \beta \cdot \delta_{pk}$$

[Step 8] Multiply the error '$\delta_{pj}$' at the middle layer j by the constant '$\alpha$' and the output value '$o_{pi}$' at the Input Layer i. Add this multiplied value to the interface-strength value '$w_{ji}$' between the Input Layer and middle layer j for revision. Furthermore, revise the offset '$\theta_j$' at the middle layer j by adding the error '$\delta_{pj}$' multiplied by the constant '$\beta$'.

$$w_{ki} = w_{ki} + \alpha \cdot \delta_{pj} o_{pi}$$

$$\theta_j = \theta_j + \beta \cdot \delta_{pj}$$

[Step 9] Have the algorithm practiced the following patterns.

[Step 10] Repeat the step 2 through step 9 until the algorithm practices every pattern.

[Step 11] Count the number of repeated practice frequency.

[Step 12] Go back to the step 2 if the number of repeated practice frequency is less than a certain maximum value.

If all the steps above have been ended, practice procedure of the Neural Back-Propagation Algorithm is eventually completed.

Hereunder, how practiced Neural Back-Propagation Algorithm through above procedures can practice and detect wrong measurement by unlawful and cheating measurement is explained.

FIG.4 depicts a flow chart of the Neural Back-Propagation Algorithm. Based on this Figure, the Neural Back-Propagation Algorithm could be explained as follows.

A traditional neural back-propagation network is configured of an Input Layer (110), a Hidden Layer (120) and Output Layer (130). The number of neurons at the Input Layer is equal to the number of the input vector components. While the algorithm is practiced, the Input Layer sends every input data to the Hidden Layer (120). Neurons at the Hidden Layer (120) send the results computed from the output neurons. Each output neuron is used to compute loaded sums, and actual results can be computed from certain expected values for the error vectors.

Then, an output node computes partial differential values of the error vectors for weights of the neurons using the results above. And, these partial differential values are inversely delivered to the Hidden Layer. Then, each Hidden Layer (120) computes the sum of the errors for the partial differential values to find certain contribution to the errors at the Output Layer (130).

If these series of practice procedures are completed, the weight vectors at the Hidden Layer (120) generated from the practice procedures can be utilized to operate a neural network system. Since inputting flows in forward direction for actual application of a practice-completed system, it takes some time for the system to actually practice; however, once the system completely practiced every pattern, it does not need to re-practice each pattern, thereby quickly generate desirable results.

Practice procedure of a multi-layered neural network using the neural back-propagation (BP) algorithm can be more specifically explained as follows.

For example, if the number of the input vectors = 11, the number of the Hidden Layers = 150, the number of the Output Layers = 3, the pattern vector at the Input Layer = 'x', the output vector at the Hidden Layer = 'z', and the output vector at the Output Layer = 'y', then the [Mathematical Formula 1] can be expressed as follows.

## Mathematical Formula 1

$$x = \begin{bmatrix} x_1 \ x_2 \ x_3 \ \cdots \ x_{11} \end{bmatrix}$$

$$z = \begin{bmatrix} z_1 \ z_2 \ z_3 \ \cdots \ z_{150} \end{bmatrix}$$

$$y = \begin{bmatrix} y_1 \ y_2 \ y_3 \end{bmatrix}$$

The interface-strength variable 'v(p$\times$n)' between the Input Layer and the Hidden Layer and the interface-strength variable 'w(m$\times$p)' between the Hidden Layer and the Output Layer can be expressed in matrix as follows.

$$v = \begin{bmatrix} v_{11} \ v_{12} \ \cdots \ v_{1n} \\ v_{21} \ v_{22} \ \cdots \ v_{2n} \\ \vdots \\ v_{p1} \ v_{p2} \ \cdots \ v_{pn} \end{bmatrix}$$

$$w = \begin{bmatrix} v_{11} \ v_{12} \ \cdots \ v_{1p} \\ v_{21} \ v_{22} \ \cdots \ v_{2p} \\ \vdots \\ v_{m1} \ v_{m2} \ \cdots \ v_{mp} \end{bmatrix}$$

Before going into the practice procedure, select 11 practice patterns that are used as the input vectors; $(x_1, d_1),(x_2,d_2),(x_3,d_3),...,(x_{11},d_{11})$.

Initialize those interface-strength variables v and w into small numbers (e.g. 0.5) and select a practice ratio (a>0). Default practice ratio is set at 0.02 with a certain practice frequency to be determined. Input pairs of the practice patterns in sequence and change the interface-strength values as follows.

A sigmoid function is used as an activation function. A unipolar sigmoid function, a most-commonly used function in a neural network model, can be expressed as shown in the [Mathematical Formula 3].

## 【Mathematical Formula 3】

$$f(NET) = \frac{1}{1 + \exp(-\lambda NET)}$$

Herein, 'λ' represents a slope.

Since a unipolar sigmoid function expressed in the [Mathematical Formula 3] is used as an activation function, related output values will be between 0 and 1. If the 'NET' value equals to 0, then an output value of a neuron becomes 1/2. As 'λ' increases, 'f = (NET)' value gets closer to a y axis. If 'λ'→ ∞, then the sigmoid function shows certain step function characteristics as shown in the [Mathematical Formula 4].

【Mathematical Formula 4】

$$f(NET) = \begin{Bmatrix} 1 & ; & NET & \geq 0 \\ 0 & ; & NET & < 0 \end{Bmatrix}$$

'λ'=1 was used. The formula above can be re-arranged as follows.

$$f(NET) = \frac{1}{1 + \exp(-NET)}$$

If the above formula is differentiated, then

【Mathematical Formula 6】

$$f'(NET) = \frac{\exp(-NET)}{[1 + \exp(-NET)]^2}$$

$$= \frac{1}{1 + \exp(-NET)} \cdot \frac{1 + \exp(-NET) - 1}{1 + \exp(-NET)}$$

$$= f(NET)[1 - f(NET)]$$

$$= y(1 - y)$$

Loaded sum of the Hidden Layers 'NET $_z$' and output value 'z' can be expressed as shown in the [Mathematical Formula 7].

【Mathematical Formula 7】

$$NET_Z = XV^T$$

$$z = f(NET_Z)$$

$$= \frac{1}{1 + \exp(1 - NET_Z)}$$

Loaded sum of the Output Layers 'NET $_Y$' and final output value 'y' can be computed as shown in the [Mathematical Formula 8].

【Mathematical Formula 8】

$$NET_y = zw^T$$

$$y = f(NET_Y)$$

$$= \frac{1}{1 + \exp(1 - NET_Y)}$$

Compare the target value 'd' with the final output value 'y' and compute a square error 'E' as shown in the [Mathematical Formula 9].

【Mathematical Formula 9】

$$E = \frac{1}{2} \sum_{i=1}^{m} (d_i - y_i)^2$$

Compute an error signal '$\delta_{yi}$' generated from the neuron i at the Output Layer using the [Mathematical Formula 10].

【Mathematical Formula 10】

$$\delta_{yi} = (d_i - y_i)f'(NET_i)$$

$$= (d_i - y_i)y_i(1 - y_i)$$

An error signal '$\delta_{zi}$' of the neuron j at the Hidden Layer can be computed as shown in the [Mathematical Formula 11].

【Mathematical Formula 11】

$$\delta_{zi} = \sum_{i=1}^{m} \delta_{yi}w_{ij} \cdot \frac{\partial_{zi}}{\partial(NET_{zi})}$$

$$= f'(NET_{zi})\sum_{i=1}^{m} \delta_{yi}w_{ij}$$

Changes of the interface-strength variable '$\Delta v^k$' between the Input Layer and the Hidden Layer at the practice step k and the changes of the interface-strength variable '$\Delta w^k$' between the Hidden Layer and the Output Layer can be computed as shown in the [Mathematical Formula 12].

Mathematical Formula 12

$$\Delta v^k = \alpha\delta_z x^k + \beta\Delta v^{k-1}$$

$$\Delta w^k = \alpha\delta_y z^k + \beta\Delta w^{k-1}$$

Herein, '$\alpha$' and '$\beta$' represents a corresponding constant for the practice ratio and momentum, respectively. And, '$\delta_z$' and '$\delta_y$' represents an error signal for the Hidden Layer and the Output Layer, respectively.

Changes of the interface-strength variables '$\Delta v$' and '$\Delta w$' between the Input Layer and the Hidden Layer depend only on the practice ratio '$\alpha$' and the error signals '$\delta_z$' and '$\delta_y$'. Generally, Since the '$\alpha$' signal is set at a small value, changes of the interface-strength variables at each practice step become relatively smaller, therefore deteriorating a practice speed. However, deterioration of the practice speed can be prevented by adding the momentum constant '$\beta$'.

The interface-strength variable '$v^{k+1}$' between the Input Layer and the Hidden Layer and the interface-strength variable '$w^{k+1}$' between the Hidden Layer and the Output Layer at the (k+1) stage can be computed as shown in the [Mathematical Formula 13].

EP 2 466 533 A1

## Mathematical Formula 13

$$v^{k+1} = v^k + \alpha\delta_z x^k + \beta\Delta v^{k-1}$$

$$w^{k+1} = w^k + \alpha\delta_y z^k + \beta\Delta w^{k-1}$$

Repeatedly input the input vectors to be practiced and change the interface-strength values. Then, end the practice procedure if the error 'E' < 'E$_{max}$'.

As indicated in the FIG.4, 'x', 'z' and 'y' each represents the Input Layer (110), the Hidden Layer (120) and the Output Layer (130), respectively. 'w' and 'v' each represents an inter-layer loaded value of the interface-strength with a default value at 0.5. 'NETz' is a loaded sum of the Hidden Layers (120) while 'NETy' represents a loaded sum of the Output Layers (130). In addition, 'dz' and 'dy' each represents an error value of the Hidden Layer (120) and the Output Layer (130) computed from the sigmoid function, respectively. Based on these error values, changes in the interface-strength values not only between the Hidden Layer (120) and the Output Layer (130) and but also between the Input Layer (110) and the Hidden Layer (120) can be computed.

An output value 'y' can be computed if an error value 'a' different from the target value 'd' equals to 0.02 or if the related loop repeats at most 10,000 times. Based on certain input vector values, ongoing practicing for the error values of ('d'-'y') can be repeated with certain loaded values of 'v' and 'w' changed.

As shown in the FIG.4, once a certain input pattern is given in each unit at the Input Layer (110), a related signal is converted in each unit, transferred to the middle layer and outputted at the Output Layer (130). Modify the interface-strength values to reduce the difference between the output value and expected value. Based on back propagation at upper layers, modify the interface-strength values at lower layers.

A supervised practice method is adopted to enable a network to compare a certain pattern at the Output Layer converted from the Input Layer with the target pattern and repeat its practice procedure until the output pattern becomes the target pattern. Otherwise, the network modifies the interface-strength values to reduce the difference between the output pattern and the target pattern. This procedure will be repeated until an error ratio equals to 0.02 or if the related loop repeats at most 10,000 times. However, this invention is not constrained by this condition just mentioned.

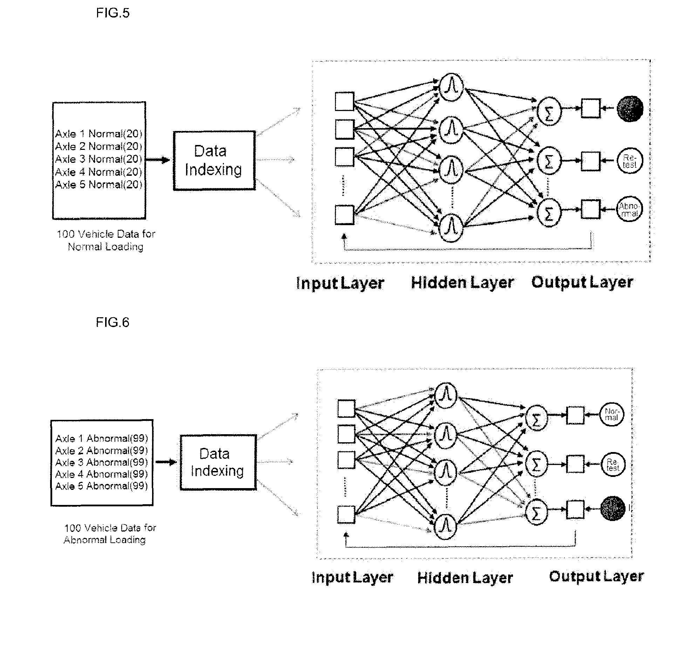

FIG.5 shows a practice mechanism of the Neural Back-Propagation Algorithm for normally loaded vehicles. As shown in the FIG.5, 20 data for each axle that is not false manipulated are inputted through related sensors. Then, total 100 data are saved as array values and generate related indexing vector data between 0 and 1 through the sigmoid function.

Data generated here will be repeatedly retrieved to modify related loaded values at each layer until they become 'Normal' state of a corresponding neural network. This procedure will be repeated till the number of repeats reaches 10,000 or a particular error value is reached.

FIG.6 represents a practice mechanism of the Neural Back-Propagation Algorithm for abnormally-loaded vehicles. As shown in the Figure #6, 20 data for each axle that is false manipulated are inputted through related sensors. Then, total 100 data are saved as array values and generate related indexing vector data between 0 and 1 through the sigmoid function.

Data generated here will be repeatedly retrieved to modify related loaded values at each layer until they become 'abnormal' state of a corresponding neural network. This procedure will be repeated till the number of repeats reaches 10,000 or a designated error value is reached.

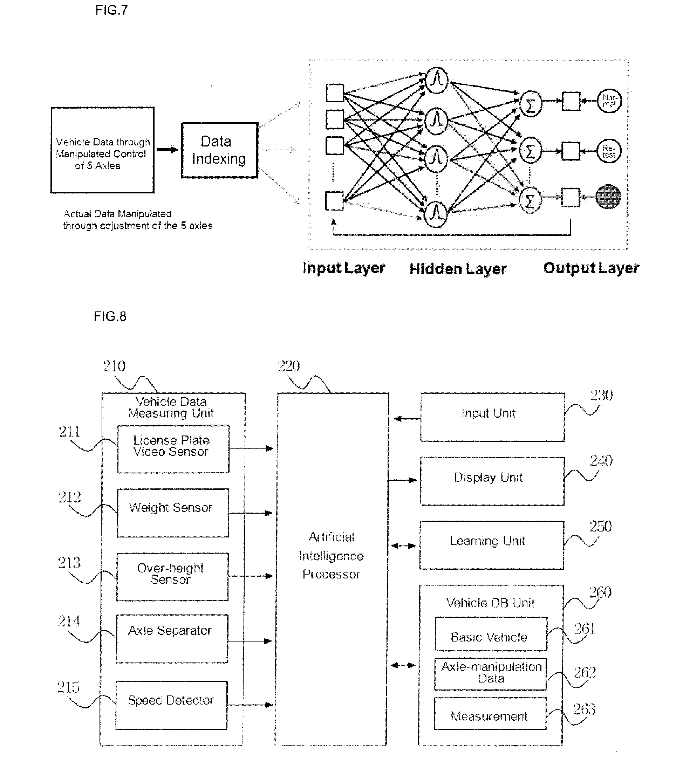

FIG.7 illustrates an actual application of the Neural Back-Propagation Algorithm that has been practiced as shown in the FIG.5 and 6. As shown in the FIG.7, those data received from Weight Sensors are complied in the indexing vector function and flowed into the Neural Back-Propagation Algorithm to output actual results.

As mentioned above, use of the practiced data enables outputting of each result and automatic retrieval (sequencing) of the algorithm practicing whenever the output results exceed 100 abnormal data. This is intended to reduce normal processing time and deliver relevant results based on pre-determined trials to complete generation of an algorithm.

Automatic setting of practice hours mentioned above can be executed through the program setting. For example, if it is set at AM 12:00 every Monday for automatic implementation, a new algorithm will be updated for every other 100 abnormal data.

'Normal', 'Retest' and 'Abnormal' Status will be indicated whenever percentage of an inputted data exceeds a set maximum. For example, if less than 60%, it is in the 'Abnormal' mode. Likewise, if 61 %~89% and 91 %~100%, then it is in the 'Retest' and 'Normal' mode, respectively. These 'Normal', 'Retest' and 'Abnormal' Status can be indicated by information of characters, figures, sounds and colors.

Hereunder, this specification will illustrate a system that is designated to detect an unlawful weight manipulation using the Neural Back-Propagation Algorithm.

FIG.8 represents a block diagram of the system for detecting an overload & unlawful and cheating weight measurement. As shown in the FIG.8, the detection system in this invention is configured of the following units; 1) A Vehicle Data Measuring Unit (210) that measures data of a vehicle, 2) An Artificial Intelligence Processor (220) that executes an Artificial Intelligence Algorithm to detect an overload & cheating weight measurement based on the data generated from the Vehicle Data Measuring Unit (210), 3) An Input Unit (230) that inputs the data into the Artificial Intelligence Processor, 4) A Display Unit (240) that displays any overload & unlawful weight measurement, 5) A Practice Unit (250) that executes practice of the artificial intelligence, and lastly 6) A Vehicle DB Unit (260) that stores the relevant data (e.g. Basic Vehicle Data, algorithm-processed data, etc).

The Vehicle Data Measuring Unit (210) is equipped with the following components;

1) A Video Sensor (211) that identifies a license plate and collects Basic Vehicle Data, 2) A Weight Sensor (212) that measure a vehicle weight, 3) An Over-height Sensor (213) that detects over-height of cargoes, 4) An Axle Number Separator (214) that is utilized whenever relevant axle data cannot be obtained through a license plate, and lastly 5) A Speed Sensor (215) that measures entering speed of a vehicle.

The Artificial Intelligence Processor (220) applied in this invention applies a Neural Back-Propagation Algorithm to detect an unlawful manipulation of weight measurement.

This processor (220) is embedded with the hardware (CPU, RAM, ROM, etc), the software to run the hardware and the software to execute the Neural Back-Propagation Algorithm.

The Input Unit (230) is an input device that is designated to input various vehicle data into the Artificial Intelligence Processor (220). The Display Unit (240) displays those data processed through Artificial Intelligence Processor (220).

The Practice Unit (250) executes practice of the Neural Back-Propagation Algorithm and may be included in the Artificial Intelligence Processor (220).

The Vehicle DB Unit (260) stores the relevant vehicle data for detection of an unlawful manipulation of weight measurement. This DB unit (260) stores and controls the following data; 1) Basic Vehicle Data (261) such as weight, # wheels and # axles, 2) False Manipulated Axle Data (262) such as weights manipulated through the axle #1/#2/#3/#4/#5 adjustments, and 3) Measured Information (263) generated from the Artificial Intelligence Processor (220).

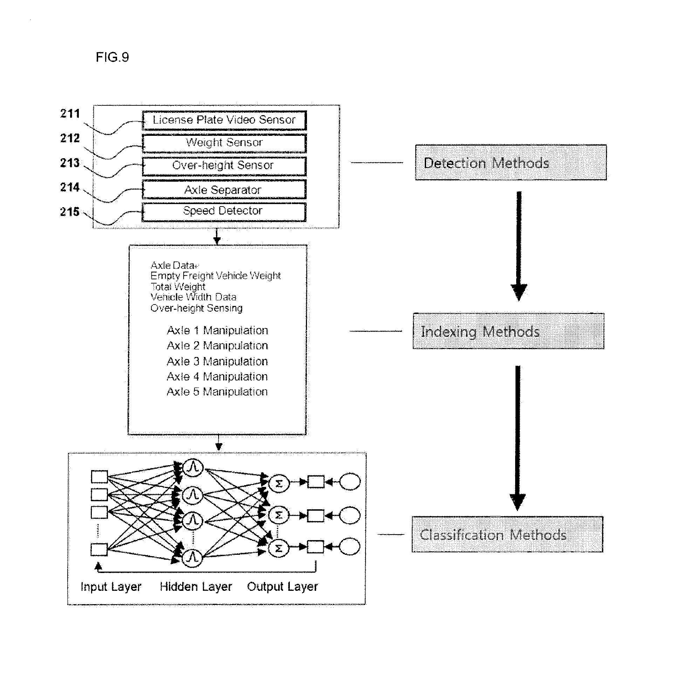

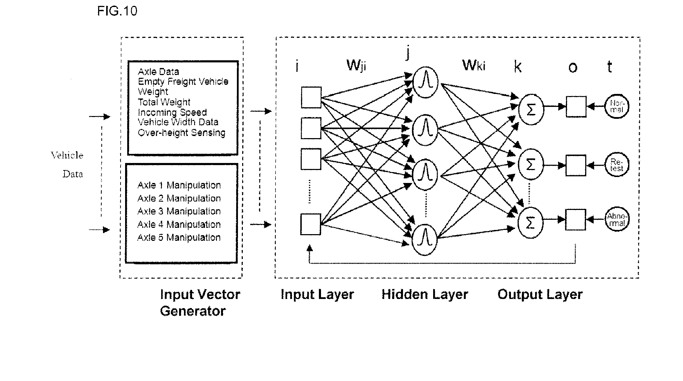

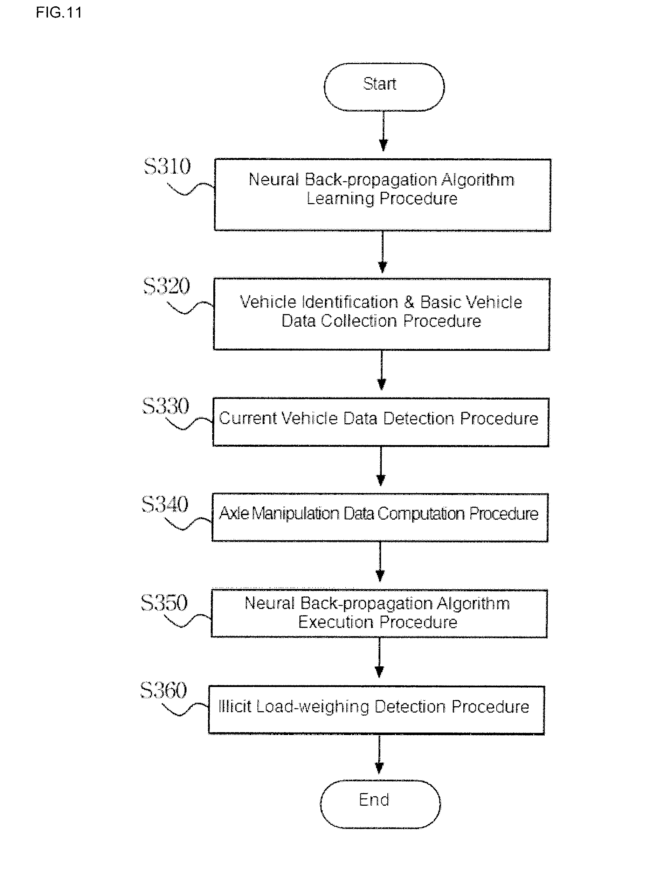

FIG.9 and 10 shows a diagram and flow chart of the detection algorithms applied in this invention. In addition, FIG.11 illustrates a sequence diagram of the detection procedures applied in this invention.

As depicted in the FIG.9 or 11, signals input into each device of the Vehicle Data Measuring Unit (210) represent particular data (e.g. axle data, # wheels at equilibrium, vehicle dead weight, entering vehicle speed, over-height of cargoes, normal weight, false manipulated weights through the axle #1/#2/#3/#4/#5 adjustments) and are included in the indexing vectors for a Basic Practice Procedure (S310).

After the practice procedure is completed, the Video Sensor (210) identifying a license plate of a vehicle retrieves basic data of the vehicle. The Basic Vehicle Data just mentioned could include the following data; truck dead weight without any cargoes, # wheels and # axles (S320). These Basic Vehicle Data can be effectively sorted out through data retrieval from the Vehicle DB Unit (260).

Then, the Weight Sensor (220), the Over-height Sensor (230), the Axle Number Separator (240) and the Speed Sensor (250) detect Current Vehicle Information (S330) such as cargoes load, cargoes height and entering speed. Whenever axles of a vehicle cannot be detected through its license plate, the Axle Number Separator can be utilized to detect such axle data.

Basic Vehicle Data retrieved and current vehicle data detected are used to compute corresponding load data for each axle adjustment in the Vehicle DB Unit (260) (S340). The Neural Back-Propagation Algorithm with those retrieved, detected and computed data factored in is then executed (S350) to categorize certain Unlawful Weight Measuring Types (S360). That is, those data processed through the detection procedure mentioned above are converted into data with certain patterns through the indexing vectors and categorized as 'Normal', 'Abnormal' and 'Retest' groups through the neural network algorithm. This procedure executing the neural network algorithm was previously illustrated in the FIG. 4, 5 or 7.

As illustrated in the FIG.5 or 7, 'Normal', 'Abnormal' and 'Retest' Status can be alarmed whenever certain data passing each algorithm exceed pre-determined maximums. For example, related alarms will be activated for the following cases; Abnormal loading if > 90%, Normal loading if < 50% and Retest if 60~80%. However, this invention is not constrained by these alarming conditions. Furthermore, these 'Normal', 'Retest' and 'Abnormal' Status can be indicated by characters, figures, sounds and colors.

If certain indexing vectors with values between 0 and 1 are generated for practice of the neural network algorithm based on such data as axle data, dead weight without any cargoes, maximum pay load, entering speed, over-height data and weight on each axle, final output values (both Normal and Abnormal output values) based on these indexing vectors can be generated through continuous changes in the interface-strength values at the middle layer and set as the system's default values.

Once those default values mentioned above are set, it could be concluded that the neural network algorithm has completed its practice procedure. This implies that the practice-completed neural network is capable of determining 'Normal', 'Retest' and 'Abnormal' Status for all information, whether known or unknown, based on the results of the interface-strength values.

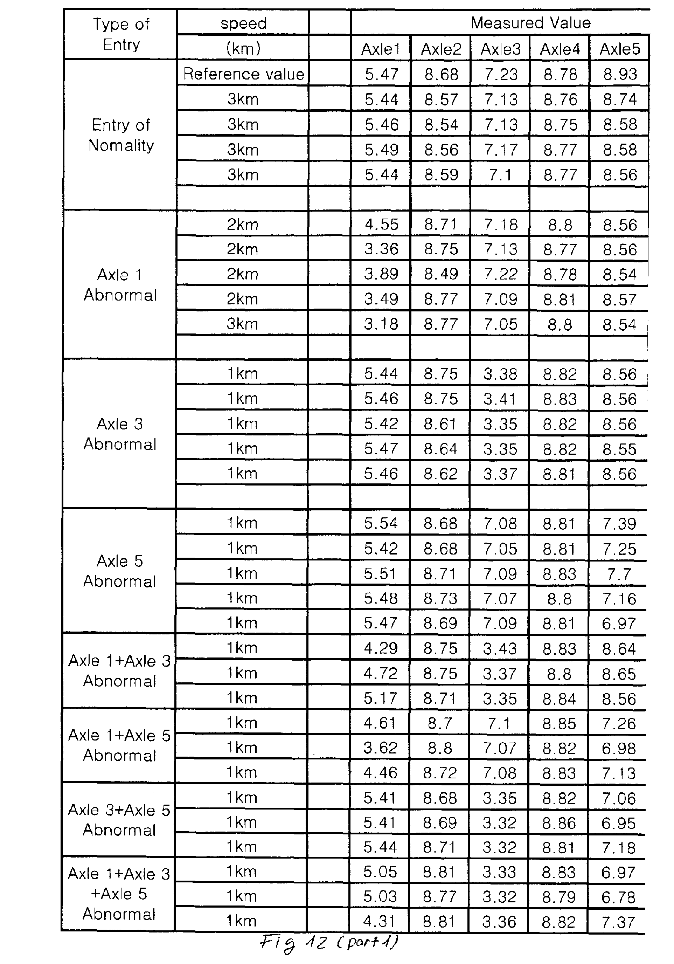

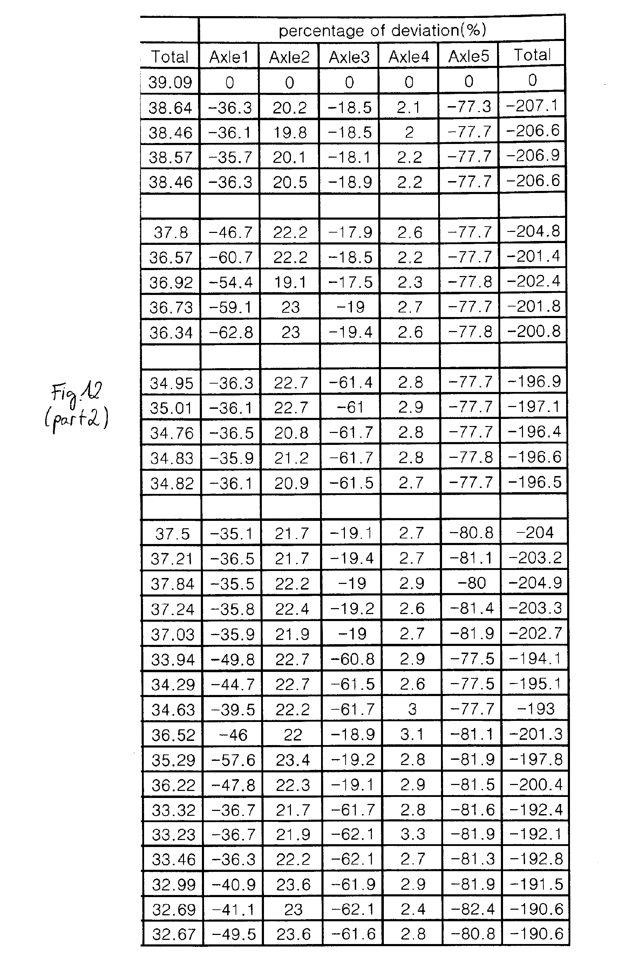

FIG.12 shows actual information samples generated from the detection method applied in this invention. These data represents the information generated from actual axle manipulation techniques based on the basic algorithm data. These data are analyzed for certain patterns and factored in the system.

Although this specification has not touched on the hardware compatibility so far, the system applied in this invention is compatible with regular computers or high performance DSP (Digital Signal Processor). Moreover, an applicable algorithm for this invention is not limited to the Neural Back-Propagation Algorithm. That is, various algorithms (e.g. fuzzy algorithm, etc) other than the Neural Back-Propagation Algorithm can also be applied to this invention.

Likewise, this invention is not limited to the explanation and example specified in this specification. Therefore, various revised or modified invention derivatives to this invention may be created within this technology art and the scope of patent claims of this invention by anyone in this technology art with common knowledge and skills.

[Explanation of Symbols]

110: Input Layer
120: Hidden Layer
130: Output Layer
210: Vehicle Data Measuring Unit
211: Video Sensor for License Plate
212: Weight Sensor
213: Over-height Sensor
214: Axle Number Separator
215: Speed Sensor
220: Artificial Intelligence Processor
230: Input Unit
240: Display Unit
250: Practice Unit
260: Vehicle DB Unit
261: Basic Vehicle Data
262: False Manipulation Information of Axle
263: Measurement Data

**Claims**

1. A Detecting Method of Wrong Measurement characterized to be configured of Practicing Phase of Artificial Intelligence Algorithm to discriminate Wrong Measured Information by false manipulation of axle from Normal Measured Information without false manipulation of axle of vehicles by Pattern Information;
Recognizing entering vehicle & Collecting Phase of Basic Data of the vehicle including dead weight, maximum pay load, and axles information;
Verifying Phase of current vehicle information including total weight, load on each axle, and entering speed;
And Classifying Phase of Measured Status of above vehicle using above collected and verified information as input value to Artificial Intelligence Algorithm

2. Detecting Method according to the Claim 1, characterized to use above collected Vehicle Basic Data & verified current vehicle information to calculate each weight information of all false manipulation cases of axles and to serve thereof information as Input Value to Artificial Intelligence Algorithm.

3. Detecting Method according to the Claim 1 or 2, characterized to be equipped with above Artificial Intelligence Algorithm configured of Input Layer, Hidden Layer and Output Layer,
and having Selection Phase for multi Practice Pattern to be used for Input Vector to above Input Layer;

Computing Phase of error between Output Value of Output Layer and actual Expected Value by inputting selected Practice Pattern pairs above in sequence;

And Modifying Phase of each Interface Strength between Input Layer, Hidden Layer and Output Layer through an activation function based on above computed error values to be finalized through above Practice processes.

4. Detecting Method according to the Claim 3, **characterized by** a Sigmoid Function expressed in the following mathematical formula for above activation function:

[Mathematical Formula]

$$f(NET) = \frac{1}{1 + \exp(-\lambda NET)}$$

5. Detecting Method according to any of the proceeding claims, **characterized by** displaying one of information among letter, figure, sound, and color to represent Normal, Retest, and Abnormal Status classified by Classifying Phase of Measured Status of above vehicle.

6. Detecting Method according to any of the proceeding claims, **characterized by** a Neural Back-Propagation Algorithm for above Artificial Intelligence Algorithm.

7. A Detecting System of Wrong Measurement according to any of the proceeding claims

8. A Detecting System of Wrong Measurement of Vehicle Information characterized to be configured of Vehicle Information Measuring Unit (210) to measure entering Vehicle Information installed in Axle Load Weigher for detecting wrong measurement of a vehicle;
Artificial Intelligence Processor (220) to detect wrong measurement if any, by executing practiced Artificial Intelligence Algorithm according to Vehicle Information created by Vehicle Information Measuring Unit (210);
An Input Unit (230) to input data into above Artificial Intelligence Processor (220);
A Display Unit (240) to display if any wrong measurement executed by above Artificial Intelligence Processor (220);
A Practice Unit (250) to execute practices of Artificial Intelligence Algorithm accommodated in above Artificial Intelligence Processor (220);
And Vehicle Information DB (260) to supply above Artificial Intelligence Processor (220) with Basic Vehicle Data and False Manipulation Information of Axle and to store measuring information executed by Artificial Intelligence Processor (220).

9. Detecting System of Wrong Measurement according to claim 8, **characterized by** practicing Artificial Intelligence Algorithm to discriminate Wrong Measured Information by false manipulation of axle from Normal Measured Information without false manipulation of axle of vehicles by Pattern Information in above Practice Unit (250).

10. Detecting System of Wrong Measurement according to claim 8 or 9, characterized to be equipped with Video Sensor (211) to identify vehicle license plate to collect Basic Data of the object vehicle, Weight Sensor (212) to measure vehicle weight, Height Sensor (213) to detect over-height of cargoes loaded on the vehicle, Axle Number Separator (214) to obtain axle information failed to get from license plate of the vehicle, and Speed Sensor (215) to measure initial entering speed of the vehicle in the above Vehicle Information Measuring Unit (210)

11. Detecting System of Wrong Measurement according to any of the claims 8 to 10, **characterized by** storing Basic Vehicle Data (261) such as weight, number of wheels, and number of axles per each vehicle type, False Manipulation Information of Axle (262) including weights in case of false manipulation of No.1, No.2, No.3, No.4, No. 5 axle respectively, and Measured Information (263) executed by Artificial Intelligence Processor (220) in above Vehicle Information DB (260),

FIG.1

FIG.2

FIG.3

FIG.4

FIG.5

Axle 1 Normal(20)
Axle 2 Normal(20)
Axle 3 Normal(20)
Axle 4 Normal(20)
Axle 5 Normal(20)

Data Indexing

100 Vehicle Data for Normal Loading

Input Layer          Hidden Layer          Output Layer

FIG.6

Axle 1 Abnormal(99)
Axle 2 Abnormal(99)
Axle 3 Abnormal(99)
Axle 4 Abnormal(99)
Axle 5 Abnormal(99)

Data Indexing

100 Vehicle Data for Abnormal Loading

Input Layer          Hidden Layer          Output Layer

FIG.7

Vehicle Data through Manipulated Control of 5 Axles → Data Indexing

Actual Data Manipulated through adjustment of the 5 axles

**Input Layer**    **Hidden Layer**    **Output Layer**

FIG.8

210 — Vehicle Data Measuring Unit
- 211 License Plate Video Sensor
- 212 Weight Sensor
- 213 Over-height Sensor
- 214 Axle Separator
- 215 Speed Detector

220 — Artificial Intelligence Processor

230 Input Unit
240 Display Unit
250 Learning Unit

260 — Vehicle DB Unit
- 261 Basic Vehicle
- 262 Axle-manipulation Data
- 263 Measurement

FIG.9

211 — License Plate Video Sensor
212 — Weight Sensor
213 — Over-height Sensor
214 — Axle Separator
215 — Speed Detector

Detection Methods

Axle Data
Empty Freight Vehicle Weight
Total Weight
Vehicle Width Data
Over-height Sensing

Axle 1 Manipulation
Axle 2 Manipulation
Axle 3 Manipulation
Axle 4 Manipulation
Axle 5 Manipulation

Indexing Methods

Input Layer    Hidden Layer    Output Layer

Classification Methods

FIG.10

Input Vector
Generator

Input Layer    Hidden Layer    Output Layer

FIG.11

```
                    ┌─────────┐
                    │  Start  │
                    └────┬────┘
                         │
                         ▼
  S310    ┌──────────────────────────────────┐
          │   Neural Back-propagation Algorithm │
          │        Learning Procedure         │
          └──────────────┬───────────────────┘
                         │
                         ▼
  S320    ┌──────────────────────────────────┐
          │  Vehicle Identification & Basic Vehicle │
          │      Data Collection Procedure    │
          └──────────────┬───────────────────┘
                         │
                         ▼
  S330    ┌──────────────────────────────────┐
          │  Current Vehicle Data Detection Procedure │
          └──────────────┬───────────────────┘
                         │
                         ▼
  S340    ┌──────────────────────────────────┐
          │  Axle Manipulation Data Computation Procedure │
          └──────────────┬───────────────────┘
                         │
                         ▼
  S350    ┌──────────────────────────────────┐
          │   Neural Back-propagation Algorithm │
          │        Execution Procedure        │
          └──────────────┬───────────────────┘
                         │
                         ▼
  S360    ┌──────────────────────────────────┐
          │  Illicit Load-weighing Detection Procedure │
          └──────────────┬───────────────────┘
                         │
                         ▼
                    ┌─────────┐
                    │   End   │
                    └─────────┘
```

| Type of Entry | speed | | Measured Value | | | | |
|---|---|---|---|---|---|---|---|
| | (km) | | Axle1 | Axle2 | Axle3 | Axle4 | Axle5 |
| Entry of Nomality | Reference value | | 5.47 | 8.68 | 7.23 | 8.78 | 8.93 |
| | 3km | | 5.44 | 8.57 | 7.13 | 8.76 | 8.74 |
| | 3km | | 5.46 | 8.54 | 7.13 | 8.75 | 8.58 |
| | 3km | | 5.49 | 8.56 | 7.17 | 8.77 | 8.58 |
| | 3km | | 5.44 | 8.59 | 7.1 | 8.77 | 8.56 |
| | | | | | | | |
| Axle 1 Abnormal | 2km | | 4.55 | 8.71 | 7.18 | 8.8 | 8.56 |
| | 2km | | 3.36 | 8.75 | 7.13 | 8.77 | 8.56 |
| | 2km | | 3.89 | 8.49 | 7.22 | 8.78 | 8.54 |
| | 2km | | 3.49 | 8.77 | 7.09 | 8.81 | 8.57 |
| | 3km | | 3.18 | 8.77 | 7.05 | 8.8 | 8.54 |
| | | | | | | | |
| Axle 3 Abnormal | 1km | | 5.44 | 8.75 | 3.38 | 8.82 | 8.56 |
| | 1km | | 5.46 | 8.75 | 3.41 | 8.83 | 8.56 |
| | 1km | | 5.42 | 8.61 | 3.35 | 8.82 | 8.56 |
| | 1km | | 5.47 | 8.64 | 3.35 | 8.82 | 8.55 |
| | 1km | | 5.46 | 8.62 | 3.37 | 8.81 | 8.56 |
| | | | | | | | |
| Axle 5 Abnormal | 1km | | 5.54 | 8.68 | 7.08 | 8.81 | 7.39 |
| | 1km | | 5.42 | 8.68 | 7.05 | 8.81 | 7.25 |
| | 1km | | 5.51 | 8.71 | 7.09 | 8.83 | 7.7 |
| | 1km | | 5.48 | 8.73 | 7.07 | 8.8 | 7.16 |
| | 1km | | 5.47 | 8.69 | 7.09 | 8.81 | 6.97 |
| Axle 1+Axle 3 Abnormal | 1km | | 4.29 | 8.75 | 3.43 | 8.83 | 8.64 |
| | 1km | | 4.72 | 8.75 | 3.37 | 8.8 | 8.65 |
| | 1km | | 5.17 | 8.71 | 3.35 | 8.84 | 8.56 |
| Axle 1+Axle 5 Abnormal | 1km | | 4.61 | 8.7 | 7.1 | 8.85 | 7.26 |
| | 1km | | 3.62 | 8.8 | 7.07 | 8.82 | 6.98 |
| | 1km | | 4.46 | 8.72 | 7.08 | 8.83 | 7.13 |
| Axle 3+Axle 5 Abnormal | 1km | | 5.41 | 8.68 | 3.35 | 8.82 | 7.06 |
| | 1km | | 5.41 | 8.69 | 3.32 | 8.86 | 6.95 |
| | 1km | | 5.44 | 8.71 | 3.32 | 8.81 | 7.18 |
| Axle 1+Axle 3 +Axle 5 Abnormal | 1km | | 5.05 | 8.81 | 3.33 | 8.83 | 6.97 |
| | 1km | | 5.03 | 8.77 | 3.32 | 8.79 | 6.78 |
| | 1km | | 4.31 | 8.81 | 3.36 | 8.82 | 7.37 |

Fig 12 (part 1)

| | percentage of deviation(%) | | | | | |
|---|---|---|---|---|---|---|
| Total | Axle1 | Axle2 | Axle3 | Axle4 | Axle5 | Total |
| 39.09 | 0 | 0 | 0 | 0 | 0 | 0 |
| 38.64 | −36.3 | 20.2 | −18.5 | 2.1 | −77.3 | −207.1 |
| 38.46 | −36.1 | 19.8 | −18.5 | 2 | −77.7 | −206.6 |
| 38.57 | −35.7 | 20.1 | −18.1 | 2.2 | −77.7 | −206.9 |
| 38.46 | −36.3 | 20.5 | −18.9 | 2.2 | −77.7 | −206.6 |
| | | | | | | |
| 37.8 | −46.7 | 22.2 | −17.9 | 2.6 | −77.7 | −204.8 |
| 36.57 | −60.7 | 22.2 | −18.5 | 2.2 | −77.7 | −201.4 |
| 36.92 | −54.4 | 19.1 | −17.5 | 2.3 | −77.8 | −202.4 |
| 36.73 | −59.1 | 23 | −19 | 2.7 | −77.7 | −201.8 |
| 36.34 | −62.8 | 23 | −19.4 | 2.6 | −77.8 | −200.8 |
| | | | | | | |
| 34.95 | −36.3 | 22.7 | −61.4 | 2.8 | −77.7 | −196.9 |
| 35.01 | −36.1 | 22.7 | −61 | 2.9 | −77.7 | −197.1 |
| 34.76 | −36.5 | 20.8 | −61.7 | 2.8 | −77.7 | −196.4 |
| 34.83 | −35.9 | 21.2 | −61.7 | 2.8 | −77.8 | −196.6 |
| 34.82 | −36.1 | 20.9 | −61.5 | 2.7 | −77.7 | −196.5 |
| | | | | | | |
| 37.5 | −35.1 | 21.7 | −19.1 | 2.7 | −80.8 | −204 |
| 37.21 | −36.5 | 21.7 | −19.4 | 2.7 | −81.1 | −203.2 |
| 37.84 | −35.5 | 22.2 | −19 | 2.9 | −80 | −204.9 |
| 37.24 | −35.8 | 22.4 | −19.2 | 2.6 | −81.4 | −203.3 |
| 37.03 | −35.9 | 21.9 | −19 | 2.7 | −81.9 | −202.7 |
| 33.94 | −49.8 | 22.7 | −60.8 | 2.9 | −77.5 | −194.1 |
| 34.29 | −44.7 | 22.7 | −61.5 | 2.6 | −77.5 | −195.1 |
| 34.63 | −39.5 | 22.2 | −61.7 | 3 | −77.7 | −193 |
| 36.52 | −46 | 22 | −18.9 | 3.1 | −81.1 | −201.3 |
| 35.29 | −57.6 | 23.4 | −19.2 | 2.8 | −81.9 | −197.8 |
| 36.22 | −47.8 | 22.3 | −19.1 | 2.9 | −81.5 | −200.4 |
| 33.32 | −36.7 | 21.7 | −61.7 | 2.8 | −81.6 | −192.4 |
| 33.23 | −36.7 | 21.9 | −62.1 | 3.3 | −81.9 | −192.1 |
| 33.46 | −36.3 | 22.2 | −62.1 | 2.7 | −81.3 | −192.8 |
| 32.99 | −40.9 | 23.6 | −61.9 | 2.9 | −81.9 | −191.5 |
| 32.69 | −41.1 | 23 | −62.1 | 2.4 | −82.4 | −190.6 |
| 32.67 | −49.5 | 23.6 | −61.6 | 2.8 | −80.8 | −190.6 |

Fig.12
(part2)

EUROPEAN SEARCH REPORT

Application Number

EP 11 17 1261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2009 0115317 A (KIM HOUNG KYUN [KR]; KIM KI TAE [KR]) 5 November 2009 (2009-11-05) * the whole document * * in particular paragraphs 58 and 59 * ----- | 1-11 | INV. G06N3/02 ADD. G01G23/00 G06N3/08 |
| X | Artur González ET AL: "Evaluation of an Artificial Neural Network Technique Applied to Multiple-Sensor Weigh-In-Motion Systems", , 1 January 2003 (2003-01-01), pages 1-19, XP55019739, TRB 2003 Annual Meeting Retrieved from the Internet: URL:http://www.ltrc.lsu.edu/TRB_82/TRB2003 -001350.pdf [retrieved on 2012-02-17] * the whole document * ----- | 1-11 | |
| X | John Heidemann ET AL: "SURE-SE:Sensors for Unexpected Roadway Events:Simulation and Evaluation", , 1 January 2008 (2008-01-01), pages 1-36, XP55019744, http://www.metrans.org/research/ Retrieved from the Internet: URL:http://www.metrans.org/research/final/ 0408_final_draft.pdf [retrieved on 2012-02-17] * page 5 - page 31 * ----- | 1-11 | TECHNICAL FIELDS SEARCHED (IPC) G06N G01G |
| A | KR 2008 0037134 A (LIM BYUNG HYUN [KR]) 30 April 2008 (2008-04-30) * the whole document * ----- -/-- | 1-10 | |

The present search report has been drawn up for all claims

| Place of search | Date of completion of the search | Examiner |
|---|---|---|
| The Hague | 20 February 2012 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

| | Europäisches Patentamt European Patent Office Office européen des brevets | **EUROPEAN SEARCH REPORT** | Application Number EP 11 17 1261 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2005 055663 A1 (WINGTEC GMBH [DE]) 14 September 2006 (2006-09-14) * abstract; claims 1-22; figures 1-5 * * page 1 - page 55 * ----- | 1-10 | |
| A | BE 1 014 495 A6 (MICHEL NIEZEN [BE]) 4 November 2003 (2003-11-04) * page 1 - page 9; figures 1,2 * ----- | 1-11 | |

TECHNICAL FIELDS
SEARCHED       (IPC)

The present search report has been drawn up for all claims

| Place of search | Date of completion of the search | Examiner |
|---|---|---|
| The Hague | 20 February 2012 | Volkmer, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**　　　EP 11 17 1261

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2012

| Patent document cited in search report | Publication date | Patent family member(s) | | Publication date |
|---|---|---|---|---|
| KR 20090115317 A | 05-11-2009 | NONE | | |
| KR 20080037134 A | 30-04-2008 | NONE | | |
| DE 102005055663 A1 | 14-09-2006 | AT | 403923 T | 15-08-2008 |
| | | DE 102005055663 A1 | | 14-09-2006 |
| | | EP | 1856680 A1 | 21-11-2007 |
| | | WO | 2006094652 A1 | 14-09-2006 |
| BE 1014495 A6 | 04-11-2003 | NONE | | |

EPO FORM P0459

For more details about this annex : see Official Journal of the European Patent Office, No. 12/82